Europäisches Patentamt

European Patent Office

Office européen des brevets

(19)

(11) **EP 0 687 908 B1**

(12) **EUROPÄISCHE PATENTSCHRIFT**

(45) Veröffentlichungstag und Bekanntmachung des Hinweises auf die Patenterteilung:
**03.05.2000 Patentblatt 2000/18**

(51) Int Cl.[7]: **G01N 31/16**

(21) Anmeldenummer: **95108058.9**

(22) Anmeldetag: **26.05.1995**

(54) **Karl-Fischer-Reagenz**

Karl Fischer reagent

Réactif Karl Fischer

(84) Benannte Vertragsstaaten:
**DE FR GB IT NL**

(30) Priorität: **18.06.1994 DE 4421453**

(43) Veröffentlichungstag der Anmeldung:
**20.12.1995 Patentblatt 1995/51**

(73) Patentinhaber: **Rdh Laborchemikalien GmbH & Co. KG**
**30926 Seelze (DE)**

(72) Erfinder: **Scholz, Eugen, Dr.**
**D-30823 Garbsen (DE)**

(74) Vertreter:
**Geissler, Bernhard, Dr. jur., Dipl.-Phys. et al**
**Patent- und Rechtsanwälte**
**Bardehle . Pagenberg . Dost . Altenburg .**
**Geissler . Isenbruck**
**Postfach 86 06 20**
**81633 München (DE)**

(56) Entgegenhaltungen:
**EP-A- 0 135 098**     **EP-A- 0 299 310**
**EP-A- 0 384 195**     **DE-A- 3 614 135**

• **ANALYTICAL CHEMISTRY, Bd. 63, Nr. 10, 15.Mai 1991 WASHINGTON, US, Seiten 557a-566a, XP 000217463 S. K. MACLEOD**

**Beschreibung**

Die vorliegende Erfindung betrifft ein Karl-Fischer-Reagenz zur Wasserbestimmung, das als Alkoholkomponente Tetrahydrofurfurylalkohol (THFA) enthält.

Bei der Karl-Fischer-Titration wird Wasser durch eine Redoxtitration bestimmt. Nach der Reaktionsgleichung

$$H_2O + I_2 + [RNH]SO_3R' + 2\,RN \rightarrow [RNH]SO_4R' + 2\,[RNH]\,I\,,$$

wobei RN für eine Base und R' für gegebenenfalls substituiertes Alkyl (Rest der Alkoholkomponente) steht, wird ein Alkylester der schwefligen Säure durch Iod oxidiert. Dabei wird ein stöchiometrische Wassermenge verbraucht. In der Praxis werden Alkylester abgeleitet von Methanol oder 2-Methoxyethanol (Methylglykol) verwendet (E. Scholz, "Karl-Fischer-Titration", Springer-Verlag, 1984).

Der verwendete Alkohol beeinflußt das Karl-Fischer-Reagenz und die damit auszuführende Karl-Fischer-Titration in verschiedener Weise. Er hat Einfluß auf die Stabilität des Reagenzes, die Geschwindigkeit der Titration und die Stöchiometrie. Je nach Ausführung der Karl-Fischer-Titration sind die einzelnen Faktoren von unterschiedlicher Bedeutung.

Die Karl-Fischer-Titration wird in der Praxis in verschiedenen Formen ausgeführt, nämlich volumetrisch oder coulometrisch. Bei der volumetrischen Titration gibt es zwei Varianten, das Einkomponenten- und das Zweikomponenten-Reagenz.

Beim Einkomponenten-Reagenz sind alle reaktiven Komponenten - Iod, Schwefeldioxid, die Base und der Alkohol - in einer Lösung enthalten. Hier liegt das Schwefeldioxid als Alkylsulfit vor, d.h. es hat bei der Herstellung mit dem Alkohol reagiert. Von Karl Fischer war Methanol als Alkohol empfohlen worden. Später hatten Peters und Jungnickel 2-Methoxyethanol als Lösungsmittel empfohlen. Andere Alkohole sind in der Praxis nicht üblich. Nachteilig ist, daß alle Einkomponenten-Reagenzien einen Titerabfall zeigen.

Bei der Wasserbestimmung mit dem Einkomponenten-Reagenz wird die zu untersuchende Probe in Methanol oder einem methanolhaltigen Lösungsmittel-Gemisch gelöst und mit dem Reagenz titriert. In anderen Alkoholen verläuft die Titration zu langsam oder nicht stöchiometrisch.

Das Zweikomponeten-Reagenz für die Volumetrie besteht aus einer Solvent-Komponente und einer Titrant-Komponente. Letztere ist eine alkoholische Iodlösung. Die Solvent-Komponente wird aus Alkohol, der Base und dem Schwefeldioxid hergestellt. Auch hier reagiert das Schwefeldioxid mit dem Alkohol unter Bildung des Alkylsulfits. Beide Lösungen sind lagerstabil. Als Alkohol wird bei den Zweikomponenten-Reagenzien fast ausschließlich Methanol verwendet.

Bei der Titration mit dem Zweikomponenten-Reagenz wird die Probe in der methanolischen Solvent-Komponente gelöst oder in Gemischen der Solvent-Komponente mit anderen organischen Lösungsmitteln. Titriert wird dann mit der Titrant-Komponente.

Bei der coulometrischen Bestimmung kann mit oder ohne Diaphragma gearbeitet werden. Es wird eine Lösung verwendet, die Schwefeldioxid, die Base, einen Alkohol und ein gelöstes Iodid enthält. Auch hier liegt das Schwefeldioxid als Alkylsulfit vor. Bei der Titration wird aus dem Iodid durch anodische Oxidation Iod erzeugt, das dann in bekannter Weise mit dem Wasser reagiert. Auch bei der Coulometrie ist Methanol der bevorzugte Alkohol. Alle anderen Alkohole ergeben einen zu geringen Leitwert des Anolyten.

Die bisher üblichen Alkohole haben gewisse Nachteile. Methanol ist giftig. Weiterhin ist die Stabilität der Einkomponenten-Reagenzien sehr unbefriedigend. Der Titer fällt täglich um etwa 1% ab. Es wird deshalb heute für Einkomponenten-Reagenzien kaum noch verwendet. Zu erwähnen sind auch Nebenreaktionen mit einigen zu untersuchenden Substanzen, wie z.B. die Alkylierung von aromatischen Aminen, die Veretherung mit Silanolen, die Acetalbildung mit Aldehyden. Methanol hat aber ein sehr gutes Lösevermögen für viele Substanzen, für die zu untersuchenden Proben, für die Komponenten des Karl-Fischer-Reagenzes und für dessen Reaktionsprodukte. Deshalb wird Methanol bevorzugt als Lösungsmittel für die Probe verwendet.

2-Methoxyethanol ist teratogen und fötotoxisch und sollte aus diesem Grunde eigentlich nicht für Laboratoriumszwecke verwendet werden. Außerdem reagiert es in den Karl-Fischer-Reagenzien so langsam, daß Methanol oder ein anderer Alkohol als Lösungsmittel für die Probe verwendet werden muß. Werden Aldehyde in Gegenwart von viel 2-Methoxyethanol titriert, tritt die sogenannte Bisulfit-Addition auf, bei der Wasser gebunden wird. Die gefundenen Wasserwerte werden dadurch verfälscht, sie sind zu niedrig. Vorteilhaft ist die bessere Stabilität der mit 2-Methoxyethanol hergestellten Einkomponenten-Reagenzien. Der Titerabfall beträgt nur etwa 1% pro Monat.

Aufgabe vorliegender Erfindung ist es, einen Alkohol zu finden, der die Nachteile der beiden üblichen Alkohole vermeidet.

Überraschenderweise erwies sich Tetrahydrofurfurylalkohol (THFA) als besonders geeignet.

Die vorliegende Erfindung betrifft somit ein Karl-Fischer-Reagenz zur Wasserbestimmung, dadurch gekennzeichnet, daß es als Alkoholkomponente Tetrahydrofurfurylalkohol (THFA) enthält.

Das erfindungsgemäße Karl-Fischer-Reagenz kann als Ein- oder Zweikomponentensystem für die Volumetrie oder als Reagenz für die Coulometrie vorliegen. Das erfindungsgemäße Karl-Fischer-Reagenz enthält neben dem Tetrahydrofurfurylalkohol die üblichen Bestandteile eines KF-Reagenzes, insbesondere Schwefeldioxid, eine Base wie Pyridin, Imidazol, Diethanolamin oder Salze von Carbonsäuren und Iod bzw. Iodid.

Das erfindungsgemäße Karl-Fischer-Reagenz enthält die genannten Bestandteile in üblichen, dem Fachmann bekannten Mengen.

Beispielsweise liegen die Konzentrationen in einem Einkomponentenreagenz bei 0,2 bis 3 mol/l Schwefeldioxid, 0,2 bis 6 mol/l Base und 0,05 bis 1 mol/l Iod.

Eine Solventkomponente enthält beispielsweise 0,2 bis 3 mol/l Schwefeldioxid und 0,2 bis 6 mol/l Base. Eine Titrantkomponente enthält beispielsweise 0,03 bis 1 mol/l Iod.

Ein erfindungsgemäßes Reagenz für die coulometrische Wasserbestimmung enthält beispielsweise 0,2 bis 3 mol/l Schwefeldioxid, 0,2 bis 5 mol/l Base und 0,01 bis 0,5 mol/l Iodid.

Neben den genannten Bestandteilen kann das erfindungsgemäße Karl-Fischer-Reagenz auch noch weitere, übliche Bestandteile bzw. Hilfsstoffe, die z.B. die Löslichkeit der Proben verbessern oder die Leitfähigkeit von coulometrischen Reagenzien erhöhen, enthalten.

Das erfindungsgemäße Karl-Fischer-Reagenz zeichnet sich in der Praxis durch einige unerwartete Vorteile aus. Die Einkomponenten-Reagenzien, die mit THFA hergestellt werden, sind stabiler als die vergleichbaren Reagenzlösungen mit 2-Methoxyethanol. Der Titerabfall liegt bei nur 0,5% pro Monat.

Die Wasserbestimmungen in THFA verlaufen rasch, so daß dieser Alkohol auch als Lösungsmittel für die Probe verwendet werden kann. So können auch Titrationen ausgeführt werden, bei denen THFA als Lösungsmittel für die Probe und auch als Reaktionspartner im Einkomponenten-Reagenz verwendet werden. Damit sind Wasserbestimmungen möglich, bei denen Methanol vollständig ausgeschlossen wird. Nebenreaktionen mit aromatischen Aminen oder Silanolen sind damit völlig unterdrückt. Die Acetalbildung mit aromatischen Aldehyden ist so weit verzögert, daß sie die Wasserbestimmung nicht mehr stört, so daß selbst größere Mengen von aromatischen Aldehyden titriert werden können, was die Voraussetzung für die Bestimmung von Wasserspuren ist. Die Bisulfit-Addition, die bei 2-Methoxyethanol auftritt, ist mit THFA nicht nachweisbar.

THFA kann deshalb sowohl als reaktive Komponente in Reagenzien als auch als Lösungsmittel für die Probe benutzt werden. Aus diesem Grunde können auch Zweikomponenten-Reagenzien mit THFA hergestellt und für die Titration verwendet werden.

Auch für coulometrische Reagenzien ist THFA geeignet. Die damit hergestellten Reagenzien haben einen höheren Leitwert als Reagenzien mit 2-Methoxyethanol.

THFA kann auch in Kombination mit anderen Lösungsmitteln oder Alkoholen verwendet werden. Einkomponenten-Reagenzien können unter Zusatz von 2-Methoxyethanol, Chloroform, aromatischen Kohlenwasserstoffen hergestellt werden wenn dies in besonderen Fällen zweckmäßig erscheint. Bei der Titration mit einem Einkomponenten-Reagenz, das THFA enthält, kann wie bisher Methanol als Lösungsmittel für die Probe verwendet werden. Alternativ können auch Mischungen von Lösungsmitteln benutzt werden, so wie es die zu untersuchende Probe erfordert. Beispiele sind Mischungen von Methanol und Chloroform oder von Methanol und langkettigen aliphatischen Alkoholen zur Titration von Fetten, Mischungen von Methanol und Formamid zur Analyse von Zuckern oder einer Mischung von THFA mit N-Methylformamid zur Wasserbestimmung in aromatischen Aldehyden.

Bei Zweikomponenten-Reagenzien können beide Komponenten mit THFA hergestellt werden. Sie können auch unterschiedliche Lösungsmittel enthalten. Die kombinierte Anwendung mit konventionellen Solvent- oder Titrantkomponenten ist möglich. So können z.B. Titrant-Komponenten mit Xylol als Lösungsmittel verwendet werden wenn die Hygroskopizität des Titriermittels verringert werden soll. Ebenso sind Zusätze von Chloroform zur Solvent-Komponente möglich, wenn das Lösungsvermögen für langkettige Kohlenwasserstoffe verbessert werden soll.

Für die Coulometrie können Anolyten hergestellt werden, die in üblicher Weise eine Base, Schwefeldioxid, ein Iodid und THFA enthalten. Weitere Zusätze sind möglich, z.B. der Zusatz von Substanzen die die elektrolytische Leitfähigkeit erhöhen (Quarternäre Ammoniumsalze) oder die das Lösungsvermögen für die zu untersuchenden Proben erhöhen (Formamid, N-Methylformamid).

Ein derartiges Reagenz kann in einer coulometrischen Titrierzelle in bekannter Weise verwendet werden. Wenn die Zelle aus 2 Kammern besteht, die durch ein Diaphragma oder eine Ionenaustauschmembran getrennt sind, wird das Reagenz in den Anodenraum gefüllt. In den Kathodenraum kann ein handelsüblicher oder ein anderer geeigneter Katholyt eingefüllt werden. Bei einer Einkammerzelle wird das erfindungsgemäße Reagenz in die Zelle eingefüllt.

### Beispiel 1:

Ein Einkomponenten-Reagenz wird hergestellt indem 170 g Imidazol (2,5 Mol) in 700 ml THFA gelöst werden. Dann werden 100 g Schwefeldioxid (1,56 Mol) und 100 g Iod (0,79 Mol) zugesetzt. Der Ansatz wird mit THFA auf 1 Liter aufgefüllt.

### Beispiel 2:

Ein Einkomponenten-Reagenz wird analog Beispiel 1 hergestellt wobei statt des Imidazols 316 g Pyridin (4 Mol) eingesetzt werden.

**Beispiel 3:**

Eine Solvent-Komponente für ein Zweikomponenten-Reagenz wird hergestellt, in dem 100 g Imidazol (1,47 Mol) und 50 g Schwefeldioxid (0,78 Mol) in THFA zu einem Gesamtvolumen von 1 Liter gelöst werden.

**Beispiel 4:**

Eine Solvent-Komponente für ein Zweikomponenten-Reagenz wird hergestellt, in dem 105 g Diethanolamin (1 Mol) und 64 g Schwefeldioxid (1 Mol) in THFA zu einem Gesamtvolumen von 1 Liter gelöst werden.

**Beispiel 5:**

Eine Titrant-Komponente für ein Zweikomponenten-Reagenz wird hergestellt indem 70 g Iod in THFA zu einem Gesamtvolumen von 1 Liter gelöst werden.

**Beispiel 6:**

1 Liter Anolyt für die coulometrische Bestimmung wird hergestellt durch Lösen von 68 g Imidazol (1 Mol), 40 g Schwefeldioxid (0,62 Mol) und 60 g Imidazolhydrobromid (0,4 Mol) in der entsprechenden Menge von THFA. Dann werden 39 g Iod (0,3 Mol) zugesetzt und durch Zusatz von wenig Wasser zu Iodid reduziert.

**Beispiel 7:**

1 Liter Anolyt für die coulometrische Bestimmung wird hergestellt durch Lösen von 50 g Imidazol (0,73 Mol), 40 g Schwefeldioxid (0,62 Mol), 60 g Imidazolhydrobromid (0,4 Mol) und 60 g Imidazolhydroiodid (0,3 Mol) in 600 ml N-Methylformamid und 200 ml THFA. Dann wird mit N-Methylformamid auf 1 Liter aufgefüllt und soviel Iod zugesetzt, daß das in den Rohstoffen enthaltene Wasser beseitigt ist.

**Anwendungsbeispiele**

Die Anwendungsbeispiele entsprechen den heute üblichen Grundformen der Karl-Fischer-Titration. Bei der volumetrischen Bestimmung mit einem Einkomponenten-Reagenz wird ein geeignetes Lösungsmittel (meist Methanol) im Titriergefäß vorgelegt. Dann wird die Probe zugesetzt und mit dem Karl-Fischer-Reagenz titriert. Beim Zweikomponenten-Reagenz wird die Solvent-Komponente vorgelegt, titriert wird mit der Titrant-Komponente. Vor der Zugabe der Probe kann das Lösungsmittel oder die Solvent-Komponente in einer Vortitration trockentitriert werden. Andernfalls wird der Wassergehalt der Vorlage getrennt ermittelt und rechnerisch berücksichtigt.
Bei der Coulometrie wird das Karl-Fischer-Reagenz in die Titrierzelle eines kommerziell hergestellten Coulometers eingefüllt. Nach dem Einschalten des Gerätes trocknet sich die Zelle selbständig. Dann wird entsprechend der Vorschrift für das Titriergerät die Probe zugesetzt und analysiert.

**Anwendungsbeispiel 1**

In der volumetrischen Titrierzelle wird Methanol vorgelegt. Die zu untersuchende Probe wird darin gelöst und der Wassergehalt mit einem Titriermittel nach Beispiel 1 oder Beispiel 2 titriert.

**Anwendungsbeispiel 2**

In der volumetrischen Titrierzelle wird THFA vorgelegt und mit einem Titriermittel nach Beispiel 1 oder Beispiel 2 trockentitriert. Dann wird die Probe zugesetzt und im THFA gelöst. Dann wird der Wassergehalt mit dem gleichen Titriermittel titriert.

**Anwendungsbeispiel 3**

In der volumetrischen Titrierzelle wird THFA vorgelegt. Dann wird die zu untersuchende Probe zugesetzt. Der Wassergehalt wird mit einem handelsüblichen Einkomponenten-Reagenz nach DAB 10 titriert.

**Anwendungsbeispiel 4**

In der volumetrischen Titrierzelle wird die Solvent-Komponente nach Beispiel 3 vorgelegt. Die wasserhaltige Probe wird zugesetzt und mit dem Titrant-Komponenten nach Beispiel 5 titriert.

**Anwendungsbeispiel 5**

In der volumetrischen Titrierzelle wird die Solvent-Komponente nach Beispiel 4 vorgelegt. Die wasserhaltige Probe wird zugesetzt und mit einer handelsüblichen Titrant-Komponente titriert, die eine Lösung von 65 g Iod in 1 Liter Methanol ist.

**Anwendungsbeispiel 6**

In der volumetrischen Titrierzelle wird eine handelsübliche Solvent-Komponente vorgelegt, z.B. eine Lösung von 120 g Pyridin und 60 g Schwefeldioxid in Methanol. Die zu untersuchende Probe wird zugesetzt. Der Wassergehalt wird mit einer Titrant-Komponente nach Beispiel 5 titriert.

**Anwendungsbeispiel 7**

Bei einem handelsüblichen Coulometer, das eine 2-Kammer-Zelle besitzt, werden in den Anodenraum und in den Kathodenraum das Reagenz nach Beispiel 6 eingefüllt. Mit diesem Reagenz wird der Wassergehalt in der für das Gerät vorgeschriebenen Weise bestimmt.

**Anwendungsbeispiel 8**

Bei einem handelsüblichen Karl-Fischer-Coulometer, das eine Zelle mit einer Kammer hat, wird das Reagenz nach Beispiel 7 eingefüllt. Der Wassergehalt wird in der dem Gerät entsprechenden Weise bestimmt.

**Patentansprüche**

1.   Karl-Fischer-Reagenz zur Wasserbestimmung enthaltend Iod oder ein Iodid, Schwefeldioxid, eine Base und eine Alkoholkomponente, dadurch gekennzeichnet, daß es als Alkoholkomponente Tetrahydrofurfurylalkohol (THFA) enthält.

2.   Karl-Fischer-Reagenz gemäß Anspruch 1, dadurch gekennzeichnet, daß es als Einkomponenten-Reagenz vorliegt, das neben THFA Schwefeldioxid, eine Base und Iod enthält.

3.   Karl-Fischer-Reagenz gemäß Anspruch 1, dadurch gekennzeichnet, daß es als Zweikomponenten-Reagenz aus Solvent-Komponente und Titrant-Komponente vorliegt.

4.   Karl-Fischer-Reagenz gemäß Anspruch 3, dadurch gekennzeichnet, daß die Solvent-Komponente THFA, Schwefeldioxid und eine Base enthält.

5.   Karl-Fischer-Reagenz gemäß Anspruch 3, dadurch gekennzeichnet, daß die Titrant-Komponente THFA und Iod enthält.

6.   Karl-Fischer-Reagenz gemäß Anspruch 1, zur coulometrischen Wasserbestimmung, dadurch gekennzeichnet, daß es neben THFA, Schwefeldioxid und einer Base Iodid enthält.

7.   Karl-Fischer-Reagenz gemäß Anspruch 6, dadurch gekennzeichnet, daß es einen Hilfsstoff zur Verbesserung der Leitfähigkeit enthält.

8.   Karl-Fischer-Reagenz gemäß einem oder mehreren der Ansprüche 1 bis 7, dadurch gekennzeichnet, daß neben THFA mindestens ein weiteres organisches Lösungsmittel enthalten ist.

9.   Karl-Fischer-Reagenz gemäß einem oder mehreren der Ansprüche 1 bis 8, dadurch gekennzeichnet, daß als Base Pyridin, Imidazol, Diethanolamin oder ein Salz einer Carbonsäure enthalten ist.

10.  Verfahren zur Wasserbestimmung nach Karl-Fischer, dadurch gekennzeichnet, daß ein Reagenz nach einem oder mehreren der Ansprüche 1 bis 9 verwendet wird.

**Claims**

1.   Karl-Fischer reagent for the determination of water, comprising iodine or an iodide, sulphur dioxide, a base and an alcohol component, characterized in that said reagent comprises as an alcohol component tetrahydrofurfuryl alcohol (THFA).

2.   Karl-Fischer reagent according to claim 1, characterized in that said reagent is a single-component reagent which comprises THFA, sulphur dioxide, a base and iodine.

3.   Karl-Fischer reagent according to claim 1, characterized in that said reagent is a two-component reagent comprising a solvent component and a titrant component.

4.   Karl-Fischer reagent according to claim 3, characterized in that the solvent component comprises THFA, sulphur dioxide, and a base.

5.   Karl-Fischer reagent according to claim 3, characterized in that the titrant component comprises THFA and iodine.

6.   Karl-Fischer reagent according to claim 1 for the coulometric determination of water, characterized in that said reagent comprises THFA. sulphur dioxide, a base, and iodide.

7.   Karl-Fischer reagent according to claim 6, characterized in that said reagent comprises an auxiliary substance to improve conductivity.

8.   Karl-Fischer reagent according to any of claims 1 to 7, characterized in that said reagent comprises THFA and at least one further organic solvent.

9.   Karl-Fischer reagent according to any of claims 1 to 8, wherein said base is pyridine, imidazole, diethanolamine or a salt of a carboxylic acid.

10.  A method for the determination of water according to Karl-Fischer, characterized in that a reagent according to any of claims 1 to 9 is used.

**Revendications**

1.   Réactif de Karl-Fischer pour le dosage de l'eau, contenant de l'iode ou un iodure, du dioxyde de soufre, une base et un composant alcool, caractérisé en ce qu'il contient en tant que composant alcool de l'alcool tétrahydrofurfurylique (THFA).

2.   Réactif de Karl-Fischer selon la revendication 1, caractérisé en ce qu'il se présente sous forme d'un réactif monocomposant, qui outre du THFA contient du dioxyde de soufre, une base et de l'iode.

3. Réactif de Karl-Fischer selon la revendication 1, caractérisé en ce qu'il se présente sous forme d'un réactif bicomposant, constitué d'un composant solvant et d'un composant de titrage.

4. Réactif de Karl-Fischer selon la revendication 3, caractérisé en ce que le composant solvant contient du THFA, du dioxyde de soufre et une base.

5. Réactif de Karl-Fischer selon la revendication 3, caractérisé en ce que le composant de titrage contient du THFA et de l'iode.

6. Réactif de Karl-Fischer selon la revendication 1, pour le dosage coulométrique de l'eau, caractérisé en ce qu'il contient un iodure en plus du THFA, du dioxyde de soufre et d'une base.

7. Réactif de Karl-Fischer selon la revendication 6, caractérisé en ce qu'il contient une substance auxiliaire pour améliorer la conductivité.

8. Réactif de Karl-Fischer selon l'une ou plusieurs des revendications 1 à 7, caractérisé en ce qu'il contient, outre le THFA, au moins un autre solvant organique.

9. Réactif de Karl-Fischer selon l'une ou plusieurs des revendications 1 à 8, caractérisé en ce qu'il contient en tant que base de la pyridine, de l'imidazole, de la diéthanolamine ou un sel d'un acide carboxylique.

10. Procédé pour doser l'eau par la méthode de Karl-Fischer, caractérisé en ce que l'on utilise un réactif selon l'une ou plusieurs des revendications 1 à 9.